# EUROPEAN PATENT SPECIFICATION

(11) **EP 1 644 470 B1**
(45) Date of publication and mention of the grant of the patent: **03.06.2015**
(21) Application number: 03740828.3
(22) Date of filing: 21.07.2003
(51) Int. Cl.: C11C 3/04, C10L 1/02

(54) **PROCESS FOR PRODUCING BIODIESEL**
VERFAHREN ZUR HERSTELLUNG VON BIODIESEL
PROCEDE POUR PRODUIRE DU BIODIESEL

(43) Date of publication of application: 12.04.2006
(73) Proprietor: Petróleo Brasileiro S.A. Petrobras, CEP-20031-912 Rio de Janeiro, RJ (BR)
(72) Inventor: KHALIL, Carlos, Nagib, CEP-21931-300 Rio de Janeiro, RJ (BR); LEITE, Lucia, Cristina, Ferreira, CEP-24350-310, Rio de Janeiro, RJ (BR)
(74) Representative: Duckworth, Timothy John
(86) International application number: PCT/GB2003/003126
(87) International publication number: WO 2005/014765

(56) References cited:
- BR-A- 8 003 739
- US-A- 4 695 411
- US-A- 5 891 203

## Description

### FIELD OF THE INVENTION

The present invention relates to an integrated process for producing biodiesellong chain fatty acid alkyl monoesters from vegetable oils, to be used as fuel or as fuel additives and economically viable by-products, such fatty acids being present in oleaginous seeds. More specifically, the present invention relates to a process for producing biodiesel by transesterification, whereby instead of reacting alcohol and castor bean-extracted oil, it is the castor bean seeds themselves that are made to react with alcohol, in the presence of an alkaline catalyst, to yield a fuel product made up of ethyl monoesters of the fatty acids present in those seeds. Also obtained is glycerin, a starchy product free from ricin useful for the formulation of cattle food and also used as raw material for producing ethyl alcohol or as a fertilizer and finally a mineral-rich product from the castor bean hull that may be used as a fertilizer.

### BACKGROUND INFORMATION

Products known or classified as biodiesel are synthetic liquid fuels obtained from renewable raw materials and made up of mixtures of long chain fatty acid alkyl monoesters derived from vegetable oils or animal fat.

The use of such products as fuel, by themselves or in admixture with other products is well known. The reference international specification for this kind of product is the "Provisional Specification for Biodiesel Fuel (B100) Blend Stock for Distillate Fuels" defined by the American Society for Testing Materials (ASTM) and designed as PS 121 - 99.

Conventional processes for the industrial production of this kind of fuel are the transesterification unit processes where the triglycerides that make up the vegetable oils or the animal fats are made to react with lower alcohols, in the presence of acidic or basic catalysts.

US patent 4,695,411 teaches one of these processes for producing a fatty acid monoester composition, useful as a fuel for a diesel engine as a replacement of gas oil. According to the teachings of said US patent, a transesterification of oils or greases of vegetable or animal origin is performed in three distinct steps, using four different anhydrous or hydrated alcohols, in the presence of acidic or basic catalysts.

A similar process is described in US patent 4,364,743, which provides a list of vegetable oils that was made to react with various alcohols in the presence of the following catalysts: sodium alkoxide, sodium or potassium hydroxide and titanium tetrahydropropoxide (basic catalysts) or the sulfuric, alkyl sulfonic or aryl sulfonic acids.

Other documents forward similar processes with modifications in the production steps of other kinds of biodiesel, none of them mentioning however the straight use of the oleaginous seeds as raw material for the transesterification reaction. These documents are US patents 5,525,126; US 6,015,440; US 6,174,501 and US 6,211,390.

Other patents, such as for example US patents 5,578,090; US 6,017,369 and US 6,129,773, teach and prove the technical viability of using several kinds of biodiesel, as such or in admixture with petroleum diesel as a fuel for vehicle or stationary engines.

In one way or another, and at different sophistication levels, the basic feature of these prior art processes is always a transesterification of vegetable oil or animal fat triglycerides, with lower primary alcohols, catalyzed by an acidic or basic, soluble or not, catalyst. Product and by-product (esters and glycerin) refining is performed at different quality and purity grades, after the physical separation of the two liquid phases formed in the reactor after distilling the remaining excess alcohol.

It should be pointed out that in all the cited patents either the process is to be carried out on a high cost, purified or semi-purified vegetable oil, or it is carried out on a sort of waste or by-product having low oil content. This means most of the time a high cost/benefit ratio, since the starting raw material - vegetable oil - has a higher price than the final biodiesel product. Further, according to the state-of-the-art technique, the alcohol, either methyl or ethyl alcohol, even if partly recycled or recovered, must be supplied from external sources. That is why; in spite of the huge government interest of several countries on the biodiesel technology and production, still heavy subsidies are required for supplying biodiesel in gas stations. On the contrary, the process of the present application, by currying the transesterification reaction on seeds and generating all the required reaction ethyl alcohol, besides other valuable co-products such as pure glycerin, agricultural fertilizers and cattle feed, dispenses with subsidizing and may be produced industrially at a reasonable cost without any burden to the economy.

Brazilian patent PI BR 8003739 teaches a process for extracting vegetable oils from seeds for obtaining a fuel using methyl or ethyl alcohol with the concomitant partial modification of oil into methyl or ethyl esters that are soluble in the corresponding alcohols. The so-obtained fuel is useful for diesel or similar engines. In spite of the reported transesterification reaction and the resulting fuel, the technique of the said Brazilian patent does not lead to a biodiesel product as specified in the above cited ASTM PS 121-99 Method. To begin with, at the time of the research that led to said patent was carried out, the term biodiesel meant the vegetable oil itself, as used in diesel engines. Since petroleum diesel contains C₈-C₂₂ hydrocarbon molecules, and vegetable oil C₁₂-C₁₈ moieties linked to a glycerol residue, the similarity of the molecules led to experiments for replacing petroleum-derived molecules for vegetable oils. It should be noted that the heating until the ethyl alcohol boiling point used in the process of PI BR 8003739 entrains vegetable components present in the seeds that are harmful to the produced fuel, such as pigments, vitamins, gum-generating phospholipids and even essential oils. The catalyst used, NaOH, yields soaps that should be withdrawn from the final product. Also, free glycerol is left in the final product, which on burning in the engine yields acrolein, a potent carcinogen. The glycerol amount based on the reaction stoichiometry is nearly 10% by weight of the final product. This is exceedingly more than allowed by the present ASTM PS 121-99, limited to 0.02wt%.

Therefore, in spite of the state-of-the-art developments, the technique still needs an economically viable process for preparing biodiesel where the transesterification of the triglycerides present in an oleaginous seed be effected directly and integrally on such seeds, dispensing with the step of oil extraction from such seeds and the need to supply ethyl alcohol from external sources while at the same time producing pure glycerin and valuable agricultural co-products, such a process being described and claimed in the present application.

### SUMMARY OF THE INVENTION

The present invention relates to a process for producing biodiesel for fuel, the process using directly the castor bean seeds as raw material to promote the transesterification of vegetable oils contained in same seeds with anhydrous ethyl alcohol, the reaction being catalyzed by a basic catalyst. This makes possible extremely high conversions without soap generation, the produced biodiesel fuel having sufficiently polar features to allow it to work as a co-solvent in the stabilization of anhydrous or hydrated ethanol admixtures with petroleum related products such as diesel oil and gasoline presently in use in Brazil.

Still, the invention makes possible to produce all the ethyl alcohol required by the transesterification reaction through a process for conventional carbohydrate fermentation of a portion of the reaction residual filter cake.

Further, the present invention promotes the conversion of the hull and final residual into an agricultural fertilizer.

Still further, since the filter cake is ricin-free, the present invention makes possible to use the residual filter cake as a constituent of cattle food.

Still, the present invention provides, by decantation, the separation of the obtained glycerin, which may be used as a raw material for related industries.

The present invention further provides an economically viable process for producing biodiesel that dispenses with any government subsidies to its commercialization.

The present invention provides a sustainable process for producing biodiesel. Specifically, the present invention provides:
[1] A process for producing biodiesel, wherein said process comprises the following steps: a) After processing and drying a feed of oleaginous seeds, preparing in a reactor an homogeneous suspension of oleaginous seeds and an anhydrous alcohol in an amount of 4:1 to 0.5:1 by part, at ambient temperature, so as to obtain an emulsion; b) Adding an alkaline alkoxide catalyst to the emulsion obtained in a), the amount of catalyst being of from 0.1 to 5 wt% based on the weight of seeds, and allowing the transesterification reaction to occur during 30 to 90 minutes at temperatures between 45 and 55°C, so as to obtain the desired alkyl esters at 98-100% conversion; c) By filtration, separating the alkyl ester products, obtaining a liquid phase and a solid phase; d) From the liquid phase, withdrawing the alcohol by distillation and decanting the remaining phase, glycerin and the desired alkyl esters; e) From the solid phase, drying and sieving, obtaining carbohydrates for fermentation or cattle feeding and hulls for fertilizer formulation.
[2] A process according to [1], wherein the oleaginous seed is a sunflower, colza, soybean or peanut seed.
[3] A process according to [1], wherein the oleaginous seed is a castor bean seed.
[4] A process according to [1] wherein the catalyst is sodium or potassium ethanoate used in the amount of 0.3wt% to 1.5wt% based on the weight of seeds.
[5] A process according to [1], wherein the reaction is carried out at 45-55°C during 40-60 minutes.
[6] A process according to [1] wherein the alcohol used in said process is completely recycled.
[7] A process according to [1] wherein the alkyl ester reaction products are neutralized and formulated into biodiesel suitable for use as fuel.
[8] A process according to [1] wherein the alkyl esters reaction products are neutralized and formulated as co-solvents in diesel and gasoline admixtures with anhydrous or hydrated ethyl alcohol.

### BRIEF DESCRIPTION OF THE DRAWING

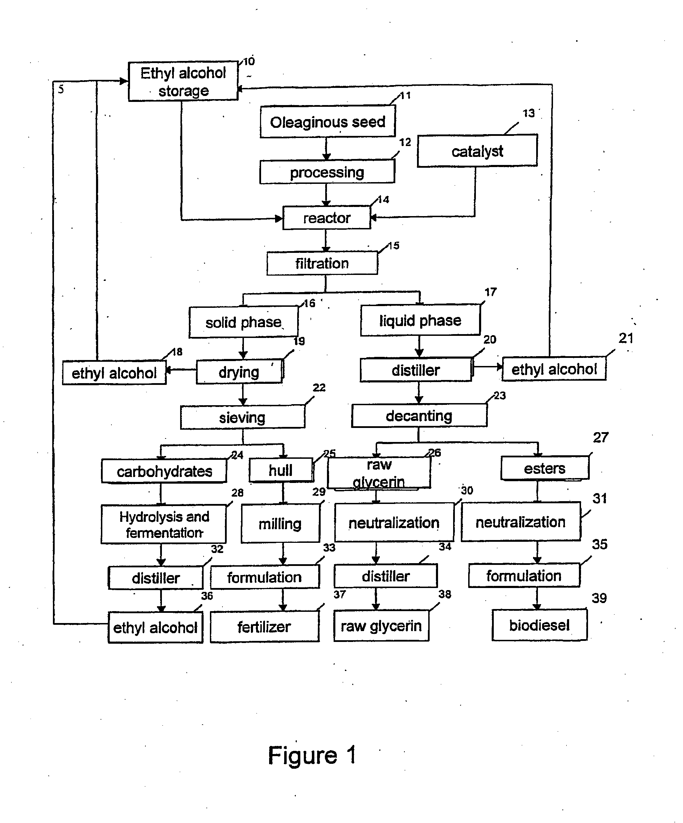

FIGURE 1 attached is a flowsheet that illustrates the process of the invention.

### DETAILED DESCRIPTION OF THE PREFERRED MODES

The present process is directed to producing a biodiesel fuel straight from oleaginous seeds, by transesterifying the triglycerides present in oleaginous seeds, such as soybean, peanuts, sunflower, and colza, being specially adapted to castor bean seeds and anhydrous ethyl alcohol in the presence of an alkaline catalyst.

The process may be carried out in a continuous or batch mode, or by alternating continuous and batch modes.

The seed on which is to be applied the transesterification process of the invention for producing biodiesel may be any triglycerides-rich oleaginous seed, that is, a seed having between 15% and 70% by weight of esterifiable triglycerides based on the total seed weight

Seeds useful for the purposes of the invention are, for example, those of sunflower, peanuts, colza or soybean. Particularly preferred is the castor bean seed, this being due to its easy production in lean soils, with the possibility of consortium cultures with sweet manioc or beans, and small scale, familiar cultures that dispense with agricultural intensive technology.

According to the present process, the seeds are made to contact an alcohol, preferably anhydrous alcohol, for example methyl alcohol or ethyl alcohol, in the amount of 4:1 to 0.5:1 parts, preferably of from 1.5:1 to 0.5:1 parts, by weight.

The optimum ratio of ethyl alcohol to seeds will be a function of the kind of seed, and the equipment used. Thus for an equipment that is not mechanically driven, it may be required to use more ethyl alcohol to render the mixture fluid and workable. In industrial facilities, less fluid mixtures may be used. In any case any excess alcohol is to be recycled.

It should be pointed out that according to the invention the alcohol employed is the esterifying agent, the reaction solvent as well as a vehicle for the solid phase. In terms of the transesterification reaction only, the amount of ethyl alcohol is ca. 15% based on the oil contained in the seed. Castor bean seeds contain 50wt% oil.

In order to make the contact easier and hasten the reaction, the reactor is provided with a suitable propeller, which turns the reaction mass into a homogeneous suspension after a period of 15 to 30 minutes.

Once the suspension if formed, and in order to shift the triglycerides transesterification reaction towards the products, a catalyst is normally employed.

Catalysts useful for the practice of the invention are alkaline alkoxides or preferably an alcoholic solution of sodium or potassium ethanoate or titanium tetrahydropropoxide. The catalyst amount Is of from 0.1 to 5.0%, preferably of from 0.3 to 1.5% by weight based on the weight of the seed feed.

The transesterification reaction occurs at a temperature between 45°C and 55°C for a period between 30 to 90 minutes, when a conversion between 98 to 100% of the triglycerides into fatty acid monoesters is attained.

After the end of the reaction, the hot products are separated by filtration of the reaction mass followed by atmospheric distillation of the ethyl alcohol remaining in the liquid phase leaving the filter. At the end of the condensed alcohol collection, the distiller liquid is transferred to a decanting tank, where it will stand for a period sufficient to separate the raw glycerin - lower phase - from the ethyl esters - upper phase. After being collected, the glycerin phase and the ester phase are directed to distinct neutralization columns, one for each product, the columns being filled with slightly acidic ion exchange resins.

The filter cake is employed as a source of alcohol production, and may afterwards be recycled to the process or used as cattle feed.

Seed hulls are also utilized as an agricultural product.

The invention will now be described based on the flowsheet of Figure 1 attached to the present specification.

Previously to the process itself, the castor bean seed feed (11) is processed (12) with the aid of vibrating sieves provided with a hot air vent in order to withdraw foreign vegetable elements and drying until humidity content lower than 0.5% by weight

Upon leaving the sieves, the seed feed (11) is directly fed to a reactor (14). Then anhydrous alcohol from a storage tank (10) is poured on the seeds. The heterogeneous feed of reactor (14) is then comminuted at ambient temperature. Catalyst (13) is then added to reactor (14) without any heating, and then heating of the reaction mass is started in order to promote the transesterification reaction until the 98 to 100% conversion of the triglycerides into fatty acid monoesters is attained.

Then the hot reaction mass is filtered (15) and the liquid phase (17) leaving the filter is pumped to a distiller (20) where ethanol remaining in the liquid phase is distilled (21) under atmospheric pressure. After the end of the condensed alcohol collection, the distiller liquid is transferred to a decanting tank (23) where it will stay for the required period of time to separate raw glycerin - lower phase - from ethyl esters - upper phase. After being collected, the glycerin phase (26) and the ester phase (27) are directed to distinct neutralization columns (30) and (31), one for each product, columns (30) and (31) being filled with a slightly acidic ion exchange resin. Typical analyses of the two kinds of products obtained in the experiments are listed in Table 2 below.

After being recovered from the filter press (15) linings, the solid phase (16) is dried in a vacuum oven (19) at 45°C during ca. 16 h to recover the remaining ethanol (18) still retained in the mass. Then the obtained dried flour is sieved (22) in a set of vibrating sieves to separate the finest solids of granulometry lower than 20 mm, that is the carbohydrate fraction (24). This fraction (24) will then be submitted to a hydrolysis and fermentation process (28) so as to render possible that after the atmospheric distillation (32) of the remaining residue in the fermenting tank, ethanol may be produced to make up the alcohol feed to the transesterification reactor (14). This step is not required when the flour is directed to cattle feeding.

As for the coarser fraction of the flour, chiefly made up of the seed hulls (25), such coarser fraction is milled in a ball mill (29) until it reaches the approximate granulometry of 20 mm. It is then added of mineral supplements required for making up formulations (33) of fertilizers (37) suitable to be used in the castor bean culture itself.

The triglycerides transesterification reaction carried out on the very seeds that contain those triglycerides not only makes the process simpler, but also renders it more economically Interesting since:
a) it lowers the raw material cost by dispensing with the use of vegetable oils that require a pre-processing to be extracted from the seeds and then refined;
b) a conventional fermentation process based on the carbohydrates present in the reaction residual seed cake separated from the alcohol phase that contained esters and glycerin, yields ethyl alcohol to be used in the reaction;
c) allows to re-utilize hulls, wastes and ashes produced during the seed cleaning, hulling and drying steps, yielding a fertilizer that may be used in the castor bean seed culture itself.

Besides, the present process is environmentally friendly since:
a) it does not yield residues that cannot be processed;
b) its main product, to be used as a substitute for diesel, is less pollutant and provides petroleum savings, this being potentially important for non-oil producing countries, or countries that do not produce it in sufficient amounts, being forced to import petroleum oil to obtain diesel oil.

The present invention will now be illustrated by the following example, which should not be construed as limiting same.

### EXAMPLE

1000g of raw castor bean seeds (Ricinus Communis L) of the Brazilian variety known as "Bull Heart", processed as described above were added to a reactor together with 800g ethyl alcohol and comminuted under vigorous agitation, at ambient temperature, until the reaction mass was a fluid, homogeneous suspension.

Then 40g of sodium alkoxide catalyst were incorporated to the mixture and for 1 hour under moderated agitation and reflux, under atmospheric pressure and constant temperature of 50°C, the transesterification reaction of said seeds was carried out.

Then, the reactor charge was cooled to 40°C and filtered, yielding 600g of solid phase and 1240g of a filtrate that after being distilled at atmospheric pressure, provided the recovery of 680g raw ethyl alcohol condensate and 560g of a liquid residue, remaining in the distiller, made up of a mixture of esters, glycerin and other by-products

Once transferred to a decanter where it was kept for two hours at ambient temperature of ca. 25°C, this residue indicated two distinct phases that, after separation, weighed 55g of raw glycerin (lower phase) and 505g of esters (upper phase) that after neutralization in a column provided with an ion exchange resin with acidic sites had the features shown in Table 1 below.

The solid phase was dried in a vacuum oven, provided with a condenser at 50°C during 16 hours at a 0.08 MPa (600mm Hg) pressure, which made possible to recover an additional 80g ethyl alcohol and 520g of dry meal.

The dried meal was then sieved in a set of vibrating sieves that yielded two main fractions. The finer fraction having a granulometry lower than 841µm (20 mesh Tyler), weighed 300g and could be directed to a specific fermentation process to yield ethyl alcohol, or else to be stored and used as cattle feed.

The coarser fraction, having granulometry higher than 841 µm (20 mesh Tyler, weighed 100g and after being milled in a ball mill until an average grain size of 841 µm (20 mesh) was directed to fertilizer formulation where it could be added of a few mineral supplements so as to turn it suitable for use in the castor bean seed culture itself. Intermediate fractions are continuously reprocessed.

Table 1 below lists the main features of the esters resulting from the Example.

**TABLE 1**

| **Feature** | **Method** | **Result** |
|---|---|---|
| **Monoester content, wt%** | **Infrared Spectrometry** | **98.9** |
| **Acid number, mg KOH/g** | **ASTM D 664** | **0.20** |
| **Aspect** | **Visual** | **Clear and transparent** |
| **ASTM Color** | **ASTM D1500** | **1.5** |
| **Free Glycerin, wt %** | **Infrared Spectrometry** | **0.4** |
| **Viscosity @ 40°C, cSt** | **ASTM D 445** | **4.6** |
| **Density @20/4°C** | **ASTM D 1298** | **0.912** |
| **Contaminants, % vol.** | **ASTM D 1769** | **0.7** |

Table 2 below lists results obtained after mixtures of 5 wt% and 10 wt% of the obtained esters with Diesel D, the metropolitan diesel produced in the Refineries owned by the Applicant, the features of which are also indicated in Table 2. It can be seen that by analogy with typical data for Diesel D itself, the biodiesel product of the Invention may be used in admixture with Diesel D as a fuel in urban vehicles.

The advantages for the improvement of the town air quality are evidenced by the rise in the resulting cetane number that makes possible the more complete fuel burning by buses and trucks engines, which ultimately lowers pollution.

There Is further a corresponding reduction in sulfur content by dilution, with sulfur being also considered a serious pollutant resulting from the burning of conventional diesel oil.

It should also be emphasized that the presence in the molecule of the ethyl esters of castor bean oil (91% ethyl ricinoleate) of a hydroxyl group (14.7% oxygen) conveys to these products an extra polarity. This makes them able to work as co-solvents for stabilizing anhydrous or hydrated ethyl alcohol mixtures with diesel and gasoline at much higher levels than those obtained in present days.

A further advantage is obtained by considering that the presence of those esters in these ternary mixtures also increase the tolerance ability of same to water contamination, so that they resist for longer times to undesirable ethyl alcohol stratification generally occurring in biodiesel and gasoline storage tanks.

Data from Table 2 below lead to the conclusion that the features of both biodiesel compositions are similar to those of an ordinary metropolitan biodiesel, as diesel D.

**TABLE 2**

| **Feature** | **Method** | **Typical diesel D (1)** | **Biodiesel A (2)** | **Biodiesel B(3)** |
|---|---|---|---|---|
| **Aspect** | **Visual (4)** | **Pass** | **Pass** | **Pass** |
| **ASTM Color** | **ASTM D 1500** | **L 1.0** | **L 1.0** | **L 1.0** |
| **Sulfur, wt%** | **ASTM D 4294** | **0.184** | **<10ppm** | **<10ppm** |
| **Distillation (50% recovered) °C** | **ASTM D 86** | **281.9** | **293** | **298** |
| **Distillation (85%recovered), °C** | **ASTM D 86** | **345.8** | **341** | **328** |
| **Density @ 20/4°C** | **ASTM D 4052** | **0.8490** | **0.8525** | **0.8541** |
| **Viscosity @ 40°C, cSt** | **ASTM D 445** | **3.383** | **3.664** | **3.944** |
| **Cold filter plugging point °C** | **IP 309** | **-5** | **-6** | **-8** |
| **Copper corrosiveness** | **ASTM D 130** | **1** | **1** | **1** |
| **Ashes, wt%** | **ASTM D 482** | **<0.0010** | **<0.0010** | **<0.0010** |
| **Ramsbottom Carbon Residue (10% final distillation), wt %** | **ASTM D 524** | **9** | **9** | **9** |
| **Cetane Number** | **ASTM D 613** | **41** | **46** | **48** |
| **Water and sediments, wt%** | **ASTM D 1769** | **Zero** | **zero** | **Zero** |

| | | | | |
|---|---|---|---|---|
| Notes: (1) Technical Rules National Fuels Department - 02/97 - Regulation 32, of August 04, 1997. (2) 95% vol. diesel D and 5% vol. of the exemplary esters (3) 90% vol. diesel D and 10% vol. of the exemplary esters (4) Clear and free from impurities | | | | |

A study carried out by the Applicant on the economical feasibility of the present process indicated that by accounting the cost of the raw material, that is, seeds, ethyl alcohol (practically no-cost since it is a co-product), catalyst and process costs, and on the other hand, the profits from the main product biodiesel, as well as co-products technical grade glycerin, cattle feed and fertilizer leads to a final price of the biodiesel around US$ 0.30 per liter, which is highly competitive.

## Claims

1. A process for producing biodiesel, wherein said process comprises the following steps:
a) After processing and drying a feed of oleaginous seeds, preparing in a reactor an homogeneous suspension of oleaginous seeds and an anhydrous alcohol in an amount of 4:1 to 0.5:1 by part, at ambient temperature, so as to obtain an emulsion,
b) Adding an alkaline alkoxide catalyst to the emulsion obtained in a), the amount of catalyst being of from 0.1 to 5 wt% based on the weight of seeds, and allowing the transesterification reaction to occur during 30 to 90 minutes at temperatures between 45 and 55 °C, so as to obtain the desired alkyl esters at 98-100% conversion;
c) By filtration, separating the alkyl ester products, obtaining a liquid phase and a solid phase;
d) From the liquid phase, withdrawing the alcohol by distillation and decanting the remaining phase, glycerin and the desired alkyl esters;
e) From the solid phase, drying and sieving, obtaining carbohydrates for fermentation or cattle feeding and hulls for fertilizer formulation.

2. A process according to claim 1, wherein the oleaginous seed is a sunflower, colza, soybean or peanut seed.

3. A process according to claim 1, wherein the oleaginous seed is a castor bean seed.

4. A process according to claim 1 wherein the catalyst is sodium or potassium ethanoate used in the amount of 0.3wt% to 1.5wt% based on the weight of seeds.

5. A process according to claim 1, wherein the reaction is carried out at 45-55 °C during 40-60 minutes.

6. A process according to claim 1 wherein the alcohol used in said process is completely recycled.

7. A process according to claim 1 wherein the alkyl ester reaction products are neutralized and formulated into biodiesel suitable for use as fuel.

8. A process according to claim 1 wherein the alkyl esters reaction products are neutralized and formulated as co-solvents in diesel and gasoline admixtures with anhydrous or hydrated ethyl alcohol.

## Patentansprüche

1. Verfahren zur Herstellung von Biodiesel, wobei das Verfahren die folgenden Schritte umfasst:
a) nach dem Verarbeiten und Trocknen einer Zufuhr von ölhaltigen Samen, Herstellen einer homogenen Suspension aus ölhaltigen Samen und einem wasserfreien Alkohol in einer Menge von 4:1 bis 0,5:1 Teilen in einem Reaktor bei Umgebungstemperatur zur Gewinnung einer Emulsion,
b) Zugeben eines alkalischen Alkoxid-Katalysators zu der in a) gewonnenen Emulsion, wobei die Menge des Katalysators bezogen auf das Gewicht der Samen zwischen 0,1 und 5 Gew.-% beträgt, und Ermöglichen der Umesterungsreaktion für 30 bis 90 Minuten bei Temperaturen zwischen 45 und 55 °C zur Gewinnung des erwünschten Alkylesters mit einer Umsetzung von 98-100 %;
c) Separieren des Alkylesterprodukts durch Filtration zur Gewinnung einer flüssigen Phase und einer festen Phase;
d) Entfernen des Alkohols aus der flüssigen Phase durch Destillation und Abgießen der verbleibenden Phase, des Glycerins und der gewünschten Alkylester;
e) Trocknen und Sieben der festen Phase zur Gewinnung von Kohlenhydraten für die Fermentation oder Viehfütterung und von Hülsen für die Düngemittelherstellung.

2. Verfahren nach Anspruch 1, wobei die ölhaltige Saat Sonnenblumen-, Raps-, Sojabohnen- oder Erdnusssaat ist.

3. Verfahren nach Anspruch 1, wobei die ölhaltige Saat eine Rizinussaat ist.

4. Verfahren nach Anspruch 1, wobei der Katalysator Natrium- oder Kaliumethanoat ist, das bezogen auf das Gewicht der Samen in der Menge von 0,3 Gew.-% bis 1,5 Gew.-% verwendet wird.

5. Verfahren nach Anspruch 1, wobei die Reaktion bei 45-55 °C für 40-60 Minuten durchgeführt wird.

6. Verfahren nach Anspruch 1, wobei der in dem Verfahren verwendete Alkohol vollständig rezykliert wird.

7. Verfahren nach Anspruch 1, wobei die Alkylester-Reaktionsprodukte neutralisiert und zu einem zur Verwendung als Kraftstoff geeigneten Biodiesel formuliert werden.

8. Verfahren nach Anspruch 1, wobei die Alkylester-Reaktionsprodukte neutralisiert und als Hilfslösemittel in Diesel- und Benzinzusätzen mit wasserfreiem oder hydriertem Ethylalkohol formuliert werden.

## Revendications

1. Procédé destiné à produire un biogazole, dans lequel ledit processus comprend les étapes suivantes consistant à :
a) après avoir traité et séché une charge de graines oléagineuses, préparer dans un réacteur une suspension homogène de graines oléagineuses et un alcool anhydre en une quantité comprise entre 4 : 1 et 0,5 : 1 par partie, à la température ambiante, de façon à obtenir une émulsion ;
b) ajouter un catalyseur alcoxyde alcalin à l'émulsion obtenue dans l'étape a), la quantité de catalyseur étant comprise entre 0,1 % en poids et 5 % en poids sur la base du poids de graines, et permettre à la réaction de transestérification de se produire pendant une durée comprise entre 30 minutes et 90 minutes à des températures comprises entre 45 °C et 55 °C, de façon à obtenir les esters alkylés souhaités selon une conversion comprise entre 98 % et 100 % ;
c) par filtration, séparer les produits d'esters alkylés, en obtenant une phase liquide et une phase solide ;
d) à partir de la phase liquide, extraire l'alcool par distillation et décanter la phase restante, la glycérine et les esters alkylés souhaités ;
e) à partir de la phase solide, sécher et tamiser, en obtenant des hydrates de carbone pour la fermentation ou l'alimentation du bétail et des coques pour la formulation d'un engrais.

2. Procédé selon la revendication 1, dans lequel la graine oléagineuse est une graine de tournesol, de colza, de soja ou d'arachide.

3. Procédé selon la revendication 1, dans lequel la graine oléagineuse est une graine de ricin.

4. Procédé selon la revendication 1, dans lequel le catalyseur est un éthanoate de sodium ou de potassium utilisé en une quantité comprise entre 0,3 % en poids et 1,5 % en poids sur la base du poids de graines.

5. Procédé selon la revendication 1, dans lequel la réaction est exécutée à des températures comprises entre 45 °C et 55 °C pendant une durée comprise entre 40 minutes et 60 minutes.

6. Procédé selon la revendication 1, dans lequel l'alcool utilisé dans ledit procédé est totalement recyclé.

7. Procédé selon la revendication 1, dans lequel les produits de réaction d'esters alkylés sont neutralisés et formulés en un biogazole approprié à une utilisation en tant que carburant.

8. Procédé selon la revendication 1, dans lequel les produits de réaction d'esters alkylés sont neutralisés et formulés en tant que cosolvants dans des mélanges de gazole et d'essence avec de l'alcool éthylique anhydre ou hydraté.
